Europäisches Patentamt

European Patent Office

Office européen des brevets

(11) Veröffentlichungsnummer: **0 133 254**
**A2**

## (12) EUROPÄISCHE PATENTANMELDUNG

(21) Anmeldenummer: 84108586.3

(22) Anmeldetag: 20.07.84

(51) Int. Cl.⁴: **B 23 P 9/04**

(30) Priorität: 22.07.83 DE 3326559

(43) Veröffentlichungstag der Anmeldung: 20.02.85
Patentblatt 85/8

(84) Benannte Vertragsstaaten: AT CH FR GB IT LI

(71) Anmelder: **EMAG MASCHINENFABRIK GMBH,
Austrasse 24, D-7335 Salach/Württemberg (DE)**

(72) Erfinder: **Hessbrüggen, Norbert, Sudetenstrasse 47/2,
D-7321 Eschenbach (DE)**

(74) Vertreter: **Zmyj, Erwin, Dipl.-Ing., Postfach 95 04 28,
D-8000 München 95 (DE)**

(54) Verfahren und Vorrichtung zum Verdichten, Verformen und Kalibrieren der Oberflächen von Rohren.

(57) Die Vorrichtung zur Ausführung von Formänderungsarbeiten, nämlich Verdichten, Verformen und Kalibrieren der Innen- oder Außenoberfläche von Rohren weist eine doppelt wirkende hydraulische Zylinder-Kolben-Einheit (13, 14) auf, die mittels eines Proportionalventiles (18) so beeinflußbar ist, daß die Schlagfrequenz, der Schlaghub und die Beschleunigung des Werkzeuges (10) verstellbar sind. Durch eine elektronische Regeleinrichtung ist das elektromagnetische Proportionalventil (18) so beeinflußbar, daß die genannten Parameter, nämlich Schlagfrequenz, Schlaghub und Beschleunigung der Werkzeuges unabhängig voneinander einstellbar sind. Mit Hilfe des Werkzeuges 10, das als Dorn zur Bearbeitung von Innenflächen oder als Ring zur Bearbeitung von Außenflächen ausgebildet sein kann, wird die notwendige Formänderungsarbeit in Form intermittierend aufgebrachter Schlagenergie ausgeführt, wobei die gesamte Formänderungsarbeit in außerordentlich kleine Arbeitsanteile je Schlaghub unterteilt ist, so daß man mit einer kleinen Vorrichtung zur Bewältigung einer großen Formänderungsarbeit auskommt, die auf einem Werkzeugrevolver einer spanabhebenden Werkzeugmaschine angebracht werden kann.

### Verfahren und Vorrichtung zum Verdichten,
### Verformen und Kalibrieren der Oberflächen
### von Rohren

Die Erfindung bezieht sich auf ein Verfahren und eine
Vorrichtung zum Verdichten, Verformen und Kalibrieren
der Oberflächen von Rohren, wobei mit Oberflächen sowohl
die Innenoberfläche als auch die äußere Oberfläche eines
Rohres gemeint ist.

Zum Kalibrieren von Rohren, insbesondere Nichteisenrohren ist es bekannt, das zu kalibrierende Rohr mit
gleichförmiger Geschwindigkeit über einen Dorn zu ziehen,
wofür beträchtliche Kräfte erforderlich sind, die entsprechend große Maschinen und Haltevorrichtungen erfordern.
In den meisten Fällen ist aber wegen zu geringer Stückzahlen
der Einsatz solcher aufwendiger Spezialmaschinen nicht
vertretbar. Häufig ist es unmöglich das zu kalibrierende
oder zu verformende Rohr mit großen Haltekräften festzuhalten, weil beispielsweise Außenrippen angebracht sind.
Schließlich können aus dem Ziehvorgang Längsriefen an
der bearbeiteten Flächen sich ergeben, die unter Umständen
wegen der geforderten Oberflächengüte nicht annehmbar sind.

Aufgabe der Erfindung ist es ein Verfahren und eine Vorrichtung bereitzustellen, wodurch es möglich ist, Rohre
sowohl an ihrer Innen- als auch an ihrer Außenoberfläche
mit einem geringem Aufwand an Maschinen und Energie bei
geringen einwirkenden Kräften zu kalibrieren, verdichten
und verformen, wobei obendrein eine besonders gute Oberflächengüte der behandelten Rohre erzielbar sein soll.

Diese Aufgabe wird ausgehend von dem eingangs erwähnten Verfahren erfindungsgemäß dadurch gelöst, daß der Verdichtungs-, Verformungs- und Kalibriervorgang durch intermittierend aufgebrachte Schlagenergie erfolgt und daß sowohl der Arbeitshub als auch der Rückhub mit der gleichen Antriebsenergie durchgeführt werden.

Durch die intermittierende Aufbringung einer Schlagenergie wird der insgesamt notwendige Energieaufwand auf sehr viele kleine zeitlich hintereinander liegende Schritte verteilt, so daß die bei jedem Schlag einwirkenden Kräfte so gering sind, daß man mit geringen Haltekräften und leicht bauenden kleinen Vorrichtungen zur Ausübung dieser Schlagenergie auskommt. Da der Arbeitshub und der Rückhub mit der gleichen Antriebsenergie durchgeführt werden, wird vermieden, daß das für die Ausübung der Formänderungsarbeit eingesetzte Werkzeug sich gegenüber der Rohroberfläche verkeilt und dadurch eine Ausübung einer stets gleichbleibenden Formänderungsarbeit unterbunden wird. Da die Formänderungsarbeit in vielen kleinen Schritten durchgeführt wird, wobei das Werkzeug nicht nur wie beim bekannten Ziehvorgang in eine Richtung sondern auch jeweils zurückbewegt wird, wird eine besonders gleichmäßige Verdichtung der Oberfläche und insbesondere eine sehr hohe Oberflächengüte erzielt.

Die Antriebsweise mit gleicher Antriebsenergie nach beiden Richtungen ist eine wesentliche Voraussetzung für eine weitere Ausgestaltung der Erfindung, wonach der Schlaghub, die Schlagfrequenz und die Beschleunigung des Schlagwerkzeuges unabhängig voneinander regelbar sind.

Hierdurch ist es möglich die Formänderungsarbeit dem jeweiligen Material und den vorhandenen Möglichkeiten der Halterung des zu bearbeitenden Werkstückes anzupassen.

Wenn die Möglichkeit besteht, daß das Rohr von beiden
Seiten gleichzeitig bearbeitet werden kann, so ist es
gemäß einer weiteren Ausgestaltung des erfindungsgemäßen
Verfahrens vorteilhaft, wenn der Bearbeitungsvorgang von
beiden Rohrenden aus synchron mit gegeneinander gerichteten
Arbeitshüben erfolgt, wodurch geringe Beanspruchungen
zwischen dem Rohr und der Haltevorrichtung eintreten,
was insbesondere dann vorteilhaft ist, wenn es sich um
besonders empfindliche Rohre handelt.

Die Vorrichtung zum Verdichten, Verformen und Kalibrieren
der Oberflächen von Rohren ist dadurch gekennzeichnet,
daß ein Dorn oder Ring mit einer doppelt wirkenden Kolben-
Zylinder-Einheit verbunden ist und daß der Bewegungsablauf
des Kolbens durch einen Regelkreis derart geregelt und
überwacht ist, daß die Schlagfrequenz der Schlaghub und
die Beschleunigung des Werkzeuges unabhängig voneinander
einstellbar sind.

Der Dorn oder Ring ist an der mit dem Werkstück zusammenwirkenden Fläche konisch ausgebildet um überhaupt eine
Formänderungsarbeit in kleinen Schritten ausführen zu können.
Da dieses Werkzeug mit einer doppelt wirkenden Kolben-Zylinder-
Einheit verbunden ist, ist gewährleistet, daß sowohl der Arbeitshub als auch der Rückhub mit der gleichen Antriebsenergie durchgeführt wird, so daß sich das Werkzeug aufgrund
seiner konischen Ausgestaltung nicht im Rohr oder auf dem
Rohr festfressen kann, wodurch nach einigen Arbeitshüben ein
Rückstellen des Werkstückes nicht mehr möglich wäre.

Vorzugsweise umfaßt der Regelkreis einen mit dem Arbeitszylinder verbundenes Proportionalventil bzw. ein Ventil
mit Proportionalregler, dessen Funktion durch eine elektronische Regeleinrichtung bzw. Mikroprozessor überwacht
ist. Mit Hilfe eines Mikroprozessors ist es ohne weiteres möglich die Arbeitsfrequenz, die Größe des Schlaghubes und
auch die Größe der Beschleunigung des Kolbens und damit
des Werkzeuges unabhängig voneinander einzustellen.

Eine besonders vorteilhafte Anwendungsmöglichkeit ergibt
sich, wenn die Vorrichtung zur Aufnahme auf einen Werkzeugträger einer vorzugsweise spanabhebenden Werkzeugmaschine
als Zusatzeinrichtung ausgebildet ist.

Diese Möglichkeit ergibt sich erst aus der kleinen Bauweise
die bei der Vorrichtung nach der vorliegenden Erfindung
möglich ist, weil die aufzubringende Formänderungsarbeit
in so kleine Schritte unterteilt werden kann, daß auch
eine im Ergebnis große Formänderung wegen der Aufteilung in
einzelne Schritte durch eine kleine Vorrichtung durchgeführt werden kann. Die Ausbildung als Zusatzeinrichtung zur
Aufnahme auf einen Werkzeugträger bzw. Werkzeugrevolver
einer spanabhenden Werkzeugmaschine ist deshalb vorteilhaft,
weil das Werkstück in einer Aufspannung zuerst spanabhebend
und dann in erfindungsgemäßer Weise ohne Spanabhebung verformt oder verdichtet oder kalibriert werden kann. Außerdem
weisen die Werkzeugrevolver derartiger Werkzeugmaschinen
Anschlußmöglichkeiten an eine hydraulische Versorgung und
eine Stromversorgung auf, so daß die erfindungsgemäße Vorrichtung für diesen Anwendungsbereich im wesentlichen auf
eine hydraulische Kolben-Zylinder-Einheit mit einem Proportionalventil beschränkt bleiben kann.

Die Erfindung ist in der Zeichnung beispielsweise dargestellt. In dieser zeigen:

- 5 -                                    0133254

Fig. 1    eine Draufsicht auf eine spanabhebende Werkzeugmaschine mit Werkzeugrevolver und darauf
          angeordneter erfindungsgemäßer Vorrichtung in
          schematischer Darstellung;

Fig. 2    eine schematische Darstellung einer ersten Ausführungsform der erfindungsgemäßen Vorrichtung;
          und

Fig. 3    diese Vorrichtung nach Fig. 2 mit einem anderen
          Werkzeug.

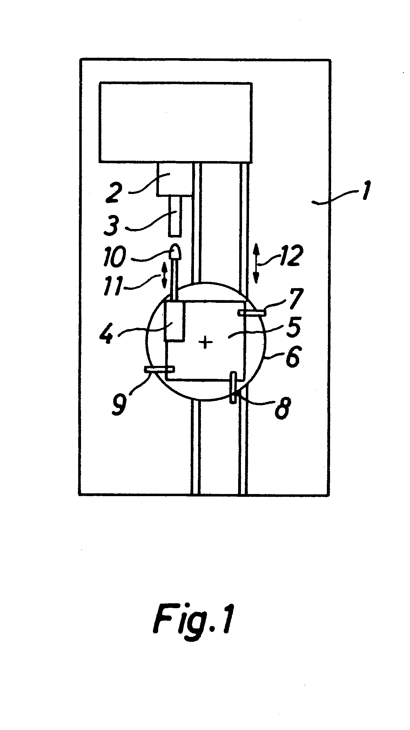

Fig. 1 zeigt eine spanabhende Werkzeugmaschine 1 bei der
in der Hauptspindel 2 ein zu bearbeitendes Rohr 3 eingespannt ist. Dieses Rohr soll mit Hilfe der erfindungsgemäßen
Vorrichtung, die insgesamt mit 4 bezeichnet ist an ihrer
inneren Oberfläche verdichtet und kalibriert werden. Die
hierfür vorgesehene Vorrichtung 4 ist auf einem Werkzeugträger 5 eines Werkzeugrevolvers 6 aufgenommen, der auch
weitere Werkzeuge 7, 8 und 9 für spanabhende Fertigung
trägt und in üblicher Weise in den drei Achsrichtungen X,
Y und Z zustellbar ist. Zur Kalibrierung der Bohrung des
Rohres 3 dient ein als Dorn ausgebildetes Werkzeug 10,
das durch die Vorrichtung 4 bewegt wird und zwar führt
das Werkzeug 10 entsprechend dem Doppelpfeil 11 Schlaghübe
aus. Dieser Schlaghub ist in seiner Länge, der Beschleunigung
und der Frequenz durch eine nicht dargestellte elektronische
Regeleinrichtung verstellbar, wobei die genannten Größen
unabhängig voneinander einstellbar sind. Mit Hilfe des
Werkzeugrevolvers 6 ist der Dorn entsprechend der möglichen
Arbeitsleistung in Richtung des Doppelpfeiles 12 in das
Rohr hinein und aus diesem wieder heraus verfahrbar, um die
erwünschte Kalibrierung durchzuführen und das Werkzeug nach Durchführung dieser Arbeit wieder herausholen zu
können.

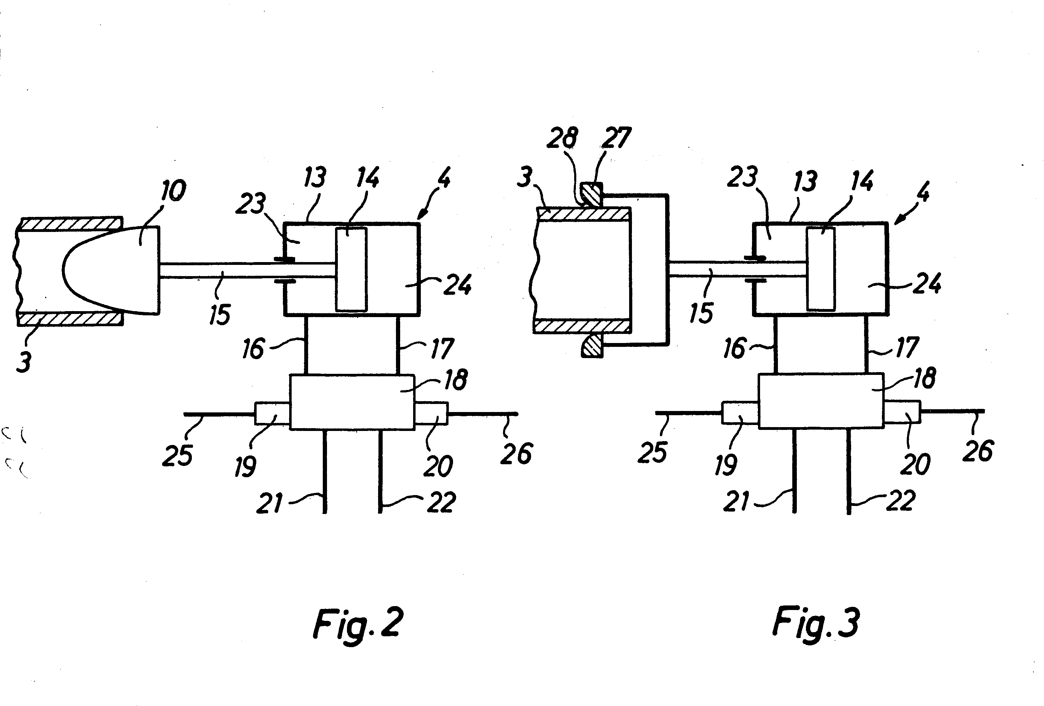

Wie aus den Fig. 2 und 3 ersichtlich umfaßt die erfindungsgemäße Vorrichtung 4 einen Hydraulikzylinder 13
und einen darin verschiebbar geführten Kolben 14, der
über einen Stößel 15 mit dem Werkzeug 10 verbunden ist.
Über Anschlußleitungen 16 und 17 steht der Zylinder 13
mit einem Proportionalventil 18 in Verbindung, dessen
Steuermagnete 19 und 20 das über die Leitungen 21 und 22
zu- bzw. abgeführte Hydrauliköl so auf die vom Kolben 14
begrenzte Arbeitsräume 23 und 24 verteilt, daß der
Stößel 15 und damit das Werkzeug 10 mit gleicher Antriebsenergie in beiden Richtungen hin- und herbewegt wird,
wobei durch Beeinflußung dieses Ventils mit Hilfe
einer elektronischen Regeleinrichtung über elektrische
Leitungen 25 und 26 die Beschleunigung des Kolbens der
Hub des Kolbens und die Frequenz des Kolbens und damit
zwangsläufig auch die entsprechenden Bewegungen des
Werkzeuges regelbar sind.

Die Darstellung in Fig. 3 unterscheidet sich von derjenigen nach Fig. 2 nur dadurch, daß am Stößel 15 ein
Ring 27 befestigt ist, der zum Verdichten und Kalibrieren
der Außenoberfläche eines Rohres dient.

Die Formänderungsarbeit wird mit Hilfe des Werkzeugs 10
bzw. 27 ausgeführt, welches mittels des Stößels 15 bewegt und dabei mit verhältnismäßig hoher Frequenz Schlaghubbewegungen ausführt, die während des Arbeitshubes zu
einer Verdichtung und Aufweitung im Falle des Werkzeuges
10 und zu einer Verdichtung und Kontraktion im Falle des
Werkzeuges 27 bezogen auf das Rohr führen. Damit diese
Formänderungsarbeiten durchgeführt werden können ist der

- 7 -                    0133254

Dorn 10 konisch ausgeführt und der Ring 27 weist an
seiner Innenseite eine konische Anlauffläche auf, die
mit 28 bezeichnet ist.

Patentansprüche

1. Verfahren zum Verdichten, Verformen und Kalibrieren
der Oberflächen von Rohren, dadurch  g e k e n n -
z e i c h n e t ,   daß der Verdichtungs-, Verform-
und Kalibriervorgang durch intermittierend aufgebrachte
Schlagenergie erfolgt und daß sowohl der Arbeitshub
als auch der Rückhub mit der gleichen Antriebsenergie
durchgeführt werden.

2. Verfahren nach Anspruch 1, dadurch  g e k e n n -
z e i c h n e t ,   daß der Schlaghub, die Schlagfrequenz
und die Beschleunigung des Schlagwerkzeuges unabhängig
voneinander regelbar sind.

3. Verfahren nach Anspruch 1 oder 2, dadurch  g e k e n n -
z e i c h n e t ,   daß der Bearbeitungsvorgang von
beiden Rohrenden aus synchron mit gegeneinander gerichteten Arbeitshüben erfolgt.

4. Vorrichtung zum Verdichten, Verformen und Kalibrieren
der Oberflächen von Rohren, dadurch  g e k e n n -
z e i c h n e t ,   daß ein Dorn (10) oder Ring (27) mit
einer doppelt wirkenden Kolben-Zylinder-Einheit (13, 14)
verbunden ist und daß der Bewegungsablauf des Kolbens

0133254

(14) durch einen Regelkreis derart geregelt und überwacht ist, daß die Schlagfrequenz, der Schlaghub und
die Beschleunigung des Werkzeuges unabhängig voneinander
einstellbar sind.

5. Vorrichtung nach Anspruch 4, dadurch   g e k e n n -
z e i c h n e t ,   daß der Regelkreis ein mit dem
Arbeitszylinder verbundenes Proportionalventil (18) umfaßt,
dessen Funktion durch eine elektronische Regeleinrichtung bzw. Mikroprozessor überwacht ist.

6. Vorrichtung nach einem der Ansprüche 3 bis 4, dadurch
g e k e n n z e i c h n e t ,   daß sie zur Aufnahme
auf einem Werkzeugträger (5) einer vorzugsweise spanabhebenden Werkzeugmaschine (1) als Zusatzeinrichtung
(4) ausgebildet ist.

0133254

**Fig.1**

0133254

Fig.2

Fig.3